# EUROPÄISCHE PATENTSCHRIFT

(11) **EP 3 782 892 B1**
(45) Veröffentlichungstag und Bekanntmachung des Hinweises auf die Patenterteilung: **17.11.2021**
(21) Anmeldenummer: 20190481.0
(22) Anmeldetag: 11.08.2020
(51) Int. Cl.: B62J 50/22, G05G 1/02, G05G 9/047

(54) **BEDIENELEMENT ZUR BEFESTIGUNG AN DEM LENKMITTEL EINES FAHRZEUGS**
CONTROL ELEMENT FOR FASTENING TO THE STEERING MEANS OF A VEHICLE
ÉLÉMENT DE COMMANDE DESTINÉ À LA FIXATION AU MOYEN DE DIRECTION D'UN VÉHICULE

(30) Priorität: 12.08.2019 DE 102019121660
(43) Veröffentlichungstag der Anmeldung: 24.02.2021
(73) Patentinhaber: Bayerische Motoren Werke Aktiengesellschaft, 80809 München (DE)
(72) Erfinder: Greger, Matthias, 80939 München (DE)

(56) Entgegenhaltungen:
- WO-A1-2007/034567
- US-A- 5 113 179
- BMW Motorrad: "Bedienungsanleitung BMW Motorrad Audiosystem K1600", Audiosystem (2010) - K 1600 GT (K48, 0601/0611), K 1600 GTL (K48, 0602/0612) , 1. Januar 2011 (2011-01-01), XP055759841, Gefunden im Internet: URL:https://www.bmw-motorrad.com/de/servic e/manuals/manuals-main.html [gefunden am 2020-12-14]

## Beschreibung

Die Erfindung betrifft ein Bedienelement für die Benutzerschnittstelle eines Fahrzeugs, insbesondere eines Motorrads.

Ein einspuriges Fahrzeug, insbesondere ein Motorrad, weist typischerweise an einem Lenkbügel bzw. Lenker bzw. Lenkrohr des Fahrzeugs ein oder mehrere Bedienelemente auf, mit denen der Fahrer des Fahrzeugs, ohne die Hand vom Lenker nehmen zu müssen, Fahrzeugfunktionen des Fahrzeugs und/oder andere Aktionen steuern kann. Insbesondere kann an dem Lenker ein Bedienelement angeordnet sein, das es dem Fahrer des Fahrzeugs ermöglicht, einen Menüpunkt in einem Eingabemenü einer Benutzerschnittstelle des Fahrzeugs auszuwählen. Ein gattungsgemäßes Bedienelement ist in der Bedienungsanleitung BMW Motorrad Audiosystem K1600, 01. Januar 2011, XP055759841, offenbart.

Das vorliegende Dokument befasst sich mit der technischen Aufgabe, den Komfort und die Sicherheit eines Fahrers bei der Bedienung einer Benutzerschnittstelle eines Fahrzeugs, insbesondere eines einspurigen Fahrzeugs, zu erhöhen. Insbesondere soll es dabei dem Fahrer ermöglicht werden, in komfortabler und sicherer Weise durch ein Eingabemenü zu scrollen und/oder unterschiedliche Ebenen eines Eingabemenüs auszuwählen.

Die Aufgabe wird durch den unabhängigen Anspruch gelöst. Vorteilhafte Ausführungsformen werden u.a. in den abhängigen Ansprüchen beschrieben. Es wird darauf hingewiesen, dass zusätzliche Merkmale eines von einem unabhängigen Patentanspruch abhängigen Patentanspruchs ohne die Merkmale des unabhängigen Patentanspruchs oder nur in Kombination mit einer Teilmenge der Merkmale des unabhängigen Patentanspruchs eine eigene und von der Kombination sämtlicher Merkmale des unabhängigen Patentanspruchs unabhängige Erfindung bilden können, die zum Gegenstand eines unabhängigen Anspruchs, einer Teilungsanmeldung oder einer Nachanmeldung gemacht werden kann. Dies gilt in gleicher Weise für in der Beschreibung beschriebene technische Lehren, die eine von den Merkmalen der unabhängigen Patentansprüche unabhängige Erfindung bilden können.

Gemäß einem Aspekt wird ein Bedienelement für ein Fahrzeug, insbesondere für ein einspuriges Fahrzeug, beschrieben. Das Fahrzeug umfasst ein Lenkmittel, insbesondere einen Lenker, ein Lenkrohr und/oder ein oder mehrere Lenkstummel, zur Lenkung des Fahrzeugs. Das Bedienelement kann ausgebildet sein, in unmittelbarer Nähe zu einem Griff an dem Lenkmittel befestigt zu werden, um es einem Nutzer des Bedienelements (insbesondere einem Fahrer des Fahrzeugs) zu ermöglichen, das Bedienelement zu betätigen, ohne dabei die Hand von dem Griff des Lenkmittels nehmen zu müssen.

Das Bedienelement umfasst ein Basisteil, das ausgebildet ist, das Bedienelement an dem Lenkmittel des Fahrzeugs zu befestigen (z.B. mittels einer Schraubverbindung). Dabei kann das Basisteil ausgebildet sein, das Lenkmittel (insbesondere den Lenker bzw. das Lenkrohr) ggf. vollständig zu umschließen. Beispielsweise kann das Basisteil zwei halbkreisförmige Schalen umfassen, die ausgebildet sind, das Lenkmittel zu umschließen und miteinander verschraubt zu werden.

Des Weiteren umfasst das Bedienelement einen Schlitten, der ausgebildet ist, von einem Nutzer des Bedienelements in eine erste Richtung entlang der x-Achse eines (kartesischen) Koordinatensystems relativ zu dem Basisteil bewegt zu werden, um eine erste Eingabe zu tätigen, und in eine entgegengesetzte zweite Richtung entlang der x-Achse relativ zu dem Basisteil bewegt zu werden, um eine zweite Eingabe zu tätigen. Das Basisteil kann zu diesem Zweck eine Gleitfläche aufweisen, auf der der Schlitten entlang der x-Achse relativ zu dem Basisteil bewegt werden kann. Der Schlitten kann an zumindest einer Seite des Basisteils angeordnet sein. Bevorzugt kann der Schlitten das Basisteil zumindest teilweise umschließen.

Es sei darauf hingewiesen, dass das (kartesische) Koordinatensystem beliebig im Raum orientiert sein kann, so dass die x-Achse beliebig im Raum orientiert sein kann. In einem bevorzugten Beispiel entsprechen im eingebauten Zustand des Bedienelements die x-Achse im Wesentlichen der Längsachse des Fahrzeugs, die y-Achse im Wesentlichen der Querachse des Fahrzeugs und die z-Achse im Wesentlichen der Hochachse des Fahrzeugs. Beispielsweise kann die x-Achse im Wesentlichen senkrecht zu dem Verlauf des Lenkmittels (insbesondere des Lenkers bzw. des Lenkrohrs) angeordnet sein. Das Lenkmittel (insbesondere der Lenker bzw. das Lenkrohr) kann im Wesentlichen koaxial zu der y-Achse angeordnet sein. Der Schlitten kann derart ausgebildet sein, dass der Schlitten das Basisteil in einer Ebene, die senkrecht zu der y-Achse angeordnet ist, vollständig umschließt.

Außerdem umfasst das Bedienelement ein den Schlitten zumindest teilweise umschließendes Betätigungsteil, das ausgebildet ist, von dem Nutzer relativ zu dem Schlitten in eine erste Richtung entlang der y-Achse des Koordinatensystems bewegt zu werden, um eine dritte Eingabe zu tätigen, und relativ zu dem Schlitten in eine entgegengesetzte zweite Richtung entlang der y-Achse des Koordinatensystems bewegt zu werden, um eine vierte Eingabe zu tätigen. Dabei kann insbesondere eine Rotation bzw. eine Drehung des Betätigungsteils relativ zu dem Schlitten ermöglicht werden (typischerweise ohne, dass dabei der Schlitten relativ zu dem Basisteil bewegt wird). Das Betätigungsteil kann derart ausgebildet sein, dass das Betätigungsteil den Schlitten in einer Ebene, die senkrecht zu der y-Achse angeordnet ist, vollständig umschließt.

Außerdem kann das Bedienelement eine Steuereinheit umfassen, die eingerichtet ist, ein von der Eingabe des Nutzers abhängiges Eingabesignal zu generieren. Dabei kann jede der möglichen Eingaben des Bedienelements durch ein unterschiedliches Eingabesignal repräsentiert werden (insbesondere um eine jeweils unterschiedliche Aktion des Fahrzeugs zu bewirken).

Das Bedienelement ermöglicht es einem Nutzer, in komfortabler und zuverlässiger Weise unterschiedliche Eingaben zu tätigen (ohne dabei die Hand von dem Lenkmittel nehmen zu müssen). So kann eine besonders komfortable und sichere Benutzerschnittstelle für ein Fahrzeug bereitgestellt werden. Insbesondere kann so ein effizientes Navigieren innerhalb eines Eingabemenüs ermöglicht werden.

In einem bevorzugten Beispiel ist das Betätigungsteil ferner ausgebildet, von dem Nutzer relativ zu dem Schlitten in eine erste Richtung entlang einer z-Achse des Koordinatensystems bewegt (insbesondere gedreht bzw. rotiert) zu werden, um eine fünfte Eingabe zu tätigen, und relativ zu dem Schlitten in eine entgegengesetzte zweite Richtung entlang der z-Achse des Koordinatensystems bewegt zu werden, um eine sechste Eingabe zu tätigen. So können in effizienter und komfortabler Weise weitere Eingabemöglichkeiten bereitgestellt werden.

Das Bedienelement kann eine Kulisse, insbesondere eine Kreuzkulisse, umfassen, die ausgebildet ist, die Relativbewegung des Betätigungsteils relativ zu dem Schlitten entlang der y-Achse und/oder entlang der z-Achse des Koordinatensystems zu führen. Dabei kann die Relativbewegung durch die Kulisse auf Bewegungen entlang der y-Achse und/oder entlang der z-Achse begrenzt werden. Bewegungen, die zwischen der y-Achse und der z-Achse verlaufen, können durch die Kulisse unterbunden werden. So können der Komfort und die Zuverlässigkeit der Eingabe weiter erhöht werden.

Das Betätigungsteil kann den Schlitten derart umschließen, dass der Schlitten entlang der x-Achse bewegt wird, wenn der Nutzer eine Kraft entlang der x-Achse auf das Betätigungsteil bewirkt. Mit anderen Worten, das Bedienelement kann derart ausgebildet sein, dass eine Bewegung des Schlittens entlang der x-Achse dadurch bewirkt werden kann, dass eine Kraft entlang der x-Achse auf das Betätigungsteil bewirkt wird. So kann eine besonders komfortable Bedienung des Bedienelements ermöglicht werden.

Wie bereits oben dargelegt, kann das Bedienelement derart ausgebildet sein, dass das Betätigungsteil relativ zu dem Schlitten innerhalb eines begrenzten Auslenkungsbereichs (z.B. von ±20° oder weniger, oder von ±10° oder weniger) entlang der y-Achse und/oder entlang der z-Achse des Koordinatensystems gedreht bzw. rotiert werden kann. Dabei kann die Relativbewegung zwischen Betätigungsteil und Schlitten derart erfolgen, dass sich dabei der Schlitten nicht relativ zu dem Basisteil bewegt.

Insbesondere kann das Bedienelement derart ausgebildet sein, dass zwischen dem Basisteil und dem Schlitten ausschließlich eine Relativbewegung entlang der x-Achse möglich ist (aber keine Relativbewegung entlang der y-Achse und/oder der z-Achse). Des Weiteren kann das Bedienelement derart ausgebildet sein, dass zwischen dem Schlitten und dem Bedienelement ausschließlich eine Relativbewegung entlang der y-Achse und/oder der z-Achse möglich ist (aber keine Relativbewegung entlang der x-Achse). So können in besonderes zuverlässiger und komfortabler Weise an dem Bedienelement unterschiedliche Eingaben von einem Nutzer bewirkt werden.

Das Betätigungsteil kann zumindest eine Mulde umfassen, die derart ausgebildet ist, dass der Nutzer mit (ggf. genau) einem Finger in die Mulde greifen kann, um eine Kraft entlang der x-Achse, entlang der y-Achse und entlang der z-Achse des Koordinatensystems auf das Betätigungsteil ausüben zu können. Durch die Bereitstellung einer Mulde innerhalb des (außenliegenden) Betätigungsteils kann der Komfort für einen Nutzer weiter erhöht werden. Die Mulde kann eine Tiefe aufweisen, die zwischen 20% und 80% einer typischen Dicke eines menschlichen Fingers liegt. Beispielsweise kann die Tiefe der Mulde zwischen 5mm und 15mm sein. Des Weiteren kann die Mulde einen Durchmesser aufweisen, der der typischen Breite eines menschlichen Fingers entspricht. Z.B. kann der Durchmesser der Mulde zwischen 1cm und 3cm sein.

Insbesondere kann das Betätigungsteil eine erste Mulde umfassen, die dem Nutzer zugewandt ist, wenn das Bedienelement an dem Lenkmittel des Fahrzeugs befestigt ist, so dass der Nutzer die erste Mulde mit dem Daumen betätigen kann. Des Weiteren kann das Betätigungsteil eine zweite Mulde umfassen, die von dem Nutzer abgewandt ist, wenn das Bedienelement an dem Lenkmittel befestigt ist, so dass der Nutzer die zweite Mulde mit dem Zeigefinger betätigen kann. Durch die Bereitstellung von mehreren Mulden kann der Komfort für den Nutzer weiter erhöht werden.

Gemäß einem weiteren Aspekt wird eine Benutzerschnittstelle (bzw. ein Benutzerschnittstellen-System) für ein (einspuriges) Fahrzeug (insbesondere für ein Motorrad) beschrieben. Das (einspurige) Fahrzeug kann ein Lenkmittel (insbesondere einen Lenker, ein Lenkrohr und/oder ein oder mehrere Lenkstummel) umfassen, das ausgebildet ist, es einem Fahrer des Fahrzeugs zu ermöglichen, das Fahrzeug zu lenken. Das Lenkmittel kann zumindest einen Griff für eine Hand des Fahrers umfassen. Des Weiteren kann das Lenkmittel an einem Griff einen Brems- und/oder Schalthebel aufweisen, der ausgebildet ist, es dem Fahrer zu ermöglichen, eine Bremsvorrichtung und/oder eine Schaltvorrichtung des Fahrzeugs zu betätigen. Typischerweise weist das Lenkmittel einen rechten Griff für die rechte Hand und einen linken Griff für die linke Hand des Fahrers auf. Des Weiteren kann das Lenkmittel an beiden Griffen einen Brems- und/oder Schalthebel aufweisen.

Die Benutzerschnittstelle umfasst ein, insbesondere an dem Griff angeordnetes, Bedienelement, das ausgebildet ist, von dem Fahrer mit der Hand betätigt zu werden, während die Hand des Fahrers den Griff berührt. Das Bedienelement kann dabei wie in diesem Dokument beschrieben ausgebildet sein.

Des Weiteren kann die Benutzerschnittstelle eine Steuereinheit umfassen, die eingerichtet ist, eine Eingabe (aus der Mehrzahl von möglichen Eingaben) an dem Bedienelement zu detektieren und eine der Eingabe entsprechende Aktion (des Fahrzeugs bzw. der Benutzerschnittstelle) auszuführen. Dabei kann jeder der möglichen Eingaben (insbesondere jeder der sechs unterschiedlichen möglichen Eingaben) eine andere Aktion zugewiesen sein.

Die Benutzerschnittstelle kann eine, insbesondere an dem Lenkmittel, etwa dem Lenker, angeordnete, Anzeigeeinheit umfassen, die eingerichtet ist, eine optische Anzeige auszugeben. Insbesondere kann die Anzeigeeinheit dabei eingerichtet ist, ein Eingabemenü mit einer Mehrzahl von Menüpunkten als optische Anzeige auszugeben. Die Steuereinheit kann eingerichtet sein, die optische Anzeige in Abhängigkeit von der Eingabe zu verändern. Insbesondere kann die Steuereinheit eingerichtet sein, in Abhängigkeit von der Eingabe innerhalb des Eingabemenüs zu navigieren und/oder einen Menüpunkt des Eingabemenüs auszuwählen und/oder eine Ebene des Eingabemenüs zu verändern. Dabei kann es insbesondere durch eine der möglichen Eingaben ermöglicht werden, von einer bestimmten Menüebene in die nächst höhere Menüebene zurück zu wechseln.

Gemäß einem weiteren Aspekt wird ein (einspuriges) (Kraft-) Fahrzeug (insbesondere ein Motorrad) beschrieben. Das Fahrzeug umfasst ein Lenkmittel (insbesondere einen Lenker), das ausgebildet ist, es einem Fahrer des Fahrzeugs zu ermöglichen, das Fahrzeug zu lenken. Außerdem umfasst das Fahrzeug einen an dem Lenkmittel angeordneten Griff für eine Hand des Fahrers. Des Weiteren umfasst das Fahrzeug die in diesem Dokument beschriebene Benutzerschnittstelle.

Es ist zu beachten, dass die in diesem Dokument beschriebenen Vorrichtungen und Systeme sowohl alleine, als auch in Kombination mit anderen in diesem Dokument beschriebenen Vorrichtungen und Systemen verwendet werden können. Des Weiteren können jegliche Aspekte der in diesem Dokument beschriebenen Vorrichtungen und Systemen in vielfältiger Weise miteinander kombiniert werden. Insbesondere können die Merkmale der Ansprüche in vielfältiger Weise miteinander kombiniert werden.

Im Weiteren wird die Erfindung anhand von Ausführungsbeispielen näher beschrieben. Dabei zeigen
Figur 1 beispielhafte Komponenten eines Motorrads, als Beispiel für ein (einspuriges) Fahrzeug;
Figuren 2a bis 2c eine beispielhafte Benutzerschnittstelle für ein Motorrad; und
Figuren 3a und 3b ein beispielhaftes Bedienelement für die Benutzerschnittstelle eines Motorrads.

Wie eingangs dargelegt, befasst sich das vorliegende Dokument mit der Bereitstellung einer Benutzerschnittstelle für ein Fahrzeug, insbesondere für ein einspuriges Fahrzeug, die es einem Nutzer ermöglicht, in komfortabler und zuverlässiger Weise gewünschte Eingaben zu tätigen.

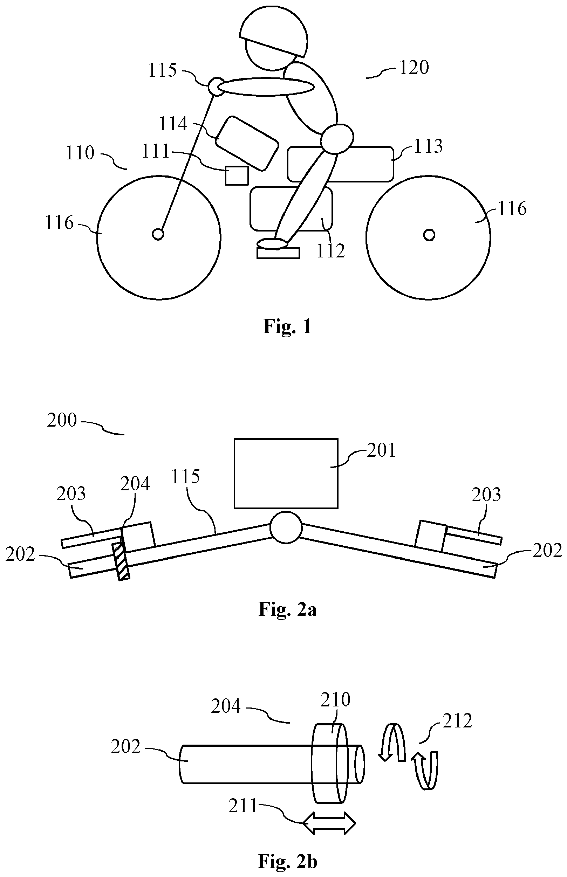

Fig. 1 zeigt beispielhafte Komponenten eines Motorrads 110 als Beispiel für ein (einspuriges) Fahrzeug. Die in diesem Dokument beschriebenen Aspekte für ein Motorrad 110 sind allgemein für ein Fahrzeug, insbesondere für ein einspuriges Fahrzeug, anwendbar. Insbesondere sind die in diesem Dokument beschriebenen Aspekte auf ein Fahrzeug anwendbar, das einen Lenker bzw. einen Lenkbügel bzw. ein Lenkrohr bzw. Lenkstummel aufweist, über den bzw. über das bzw. über die das Fahrzeug gelenkt werden kann.

Das Motorrad 110 umfasst Räder 116, insbesondere ein Vorderrad und ein Hinterrad, wobei das Vorderrad 116 mittels eines Lenkers 115 gelenkt werden kann. Des Weiteren umfasst das Motorrad 110 einen Antriebsmotor 112 (z.B. einen Ottomotor und/oder eine elektrische Maschine). Ferner umfasst das Motorrad 110 einen Energiespeicher 114 (z.B. einen Kraftstofftank) sowie einen Sitz bzw. eine Sitzbank 113 für einen Fahrer 120 des Motorrads 110. Außerdem zeigt Fig. 1 eine beispielhafte Steuereinheit 111 des Motorrads 110, die eingerichtet ist, Funktionen des Motorrads 110 zu steuern. Die Steuereinheit 111 kann ggf. (zumindest teilweise) Teil des in diesem Dokument beschriebenen Bedienelements und/oder der in diesem Dokument beschriebenen Benutzerschnittstelle sein.

Der Lenker 115 kann ausgebildet sein, es einem Nutzer 120 des Fahrzeugs 110 zu ermöglichen, das Motorrad 110 zu lenken. Insbesondere kann der Lenker 115 zumindest ein Lenkerrohr umfassen, an dem zumindest ein Griff 202 (siehe Fig. 2a) angeordnet ist. Das zumindest eine Lenkerrohr kann (fest) mit einer Gabelbrücke des Motorrads 110 verbunden sein, wobei die Gabelbrücke mit einer Gabel des Motorrads 110 verbunden sein kann. Das zumindest eine Lenkerrohr kann im Wesentlichen oder zumindest bereichsweise senkrecht zu der Gabel des Motorrads 110 verlaufen. Des Weiteren kann sich das zumindest eine Lenkerrohr des Lenkers 115 ausgehend von der Gabelbrücke zumindest teilweise entlang der Querachse des Motorrads 110 erstrecken.

Der Lenker 115 kann einen (ggf. durchgängigen), durch ein oder mehrere Lenkrohre gebildeten, Lenkbügel umfassen, bzw. der Lenker 115 kann ein Lenkbügel sein. An dem Lenkbügel können ein rechter Griff 202 und ein linker Griff 202 angeordnet sein. Alternativ kann der Lenker 115 Lenkstummel aufweisen bzw. aus Lenkstummeln bestehen (z.B. einem linken Lenkstummel und einem rechten Lenkstummen), die jeweils an der Gabelbrücke des Motorrads 110 befestigt sein können.

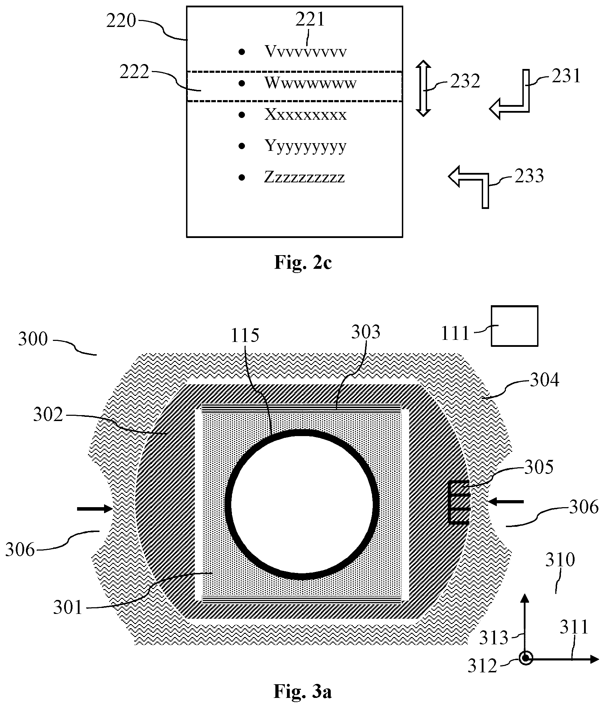

An dem Lenker 115 des Motorrads 110 können, wie in den Figuren 2a bis 2c dargestellt, Bedienelemente 204 angeordnet sein, über die ein oder mehrere Funktionen des Motorrads 110 durch den Nutzer 120 gesteuert werden können. An den Griffen 202 des Lenkers 115 kann jeweils ein Bremshebel 203 angeordnet sein, mit dem das Vorderrad 116 bzw. das Hinterrad 116 des Motorrads 110 abgebremst werden können. Des Weiteren kann an dem Lenker 115 ein Bildschirm 201 angeordnet sein, auf dem z.B. ein Eingabemenü 220 dargestellt sein kann (siehe Fig. 2c). Ferner können an zumindest einem der Griffe 202 ein oder mehrere Bedienelemente 204 angeordnet sein, die es einem Nutzer ermöglichen, durch das Eingabemenü 220 zu navigieren und ggf. Aktionen auszulösen. Das Bedienelement 204 und der Bildschirm (allgemein als Anzeigeeinheit bezeichnet) 201 können Teil einer Benutzerschnittstelle bzw. eines Benutzerschnittstellen-Systems 200 des Motorrads 110 sein.

Das Bedienelement 204 kann z.B. ein um den Griff 202 drehbares Rad 210 umfassen (siehe Fig. 2b). Durch die Drehbewegung 212 des Rads 210 kann z.B. ein Scrollen 232 durch eine Liste 221 von Menüpunkten 222 bewirkt werden. Andererseits kann z.B. durch eine Kippbewegung 211 des Rads 210 eine Auswahl 231 eines Menüpunktes 222 bewirkt werden. So können in komfortabler und sicherer Weise Eingaben an einer menübasierten Benutzerschnittstelle 200 getätigt werden. Insbesondere kann das drehbarbar und kippbar gelagerte Rad 210 derart nah an dem Griff 202 angeordnet sein, dass das Rad 210 mit der (durch den Daumen und den Zeigefinger gebildeten) Seitenfläche der Hand betätigt werden kann, während die Hand den Griff 202 umschließt.

Zum Scrollen durch ein Eingabemenü 220 kann somit das Rad 210 mittels des Daumens des Fahrers des Fahrzeugs 110 bewegt werden. Bei einem relativ langen Eingabemenü 220 mit relativ vielen Menüpunkten 222 muss dabei das Rad 210 typischerweise mit dem Daumen nachgegriffen werden, was für den Fahrer des Fahrzeugs 110 als unangenehm empfunden werden kann. Des Weiteren ermöglicht das in Fig. 2b dargestellte Bedienelement 204 ggf. keine Zurück-Funktion 233, mit der von einer bestimmten Ebene des Eingabemenüs 220 auf eine nächst höhere Ebene des Eingabemenüs 220 zurückgesprungen werden kann.

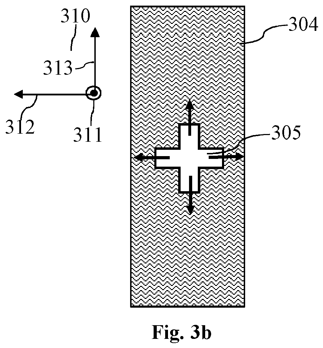

Figuren 3a und 3b zeigen ein Bedienelement 300 für eine Benutzerschnittstelle 200, das an dem Lenker 115 eines Fahrzeugs 110 befestigt werden kann. Das Bedienelement 300 weist ein mit dem Lenker 115 fest verbundenes Basisteil 301 auf, wobei das Basisteil 301 die Basis, insbesondere die Gleitebene 303, für einen Schlitten 302 bildet, der auf dem Basisteil 301 vor und zurück bzw. hin und her bewegt werden kann (entlang der x-Achse 311 eines Koordinatensystems 310).

Beispielsweise kann der Schlitten 302 derart angeordnet sein, dass der Schlitten 302 mit dem Daumen eines Nutzers in eine erste Richtung (entlang der x-Achse 311) geschoben werden kann (um ein erstes Eingabesignal zu bewirken), und dass der Schlitten 302 mit dem Zeigefinger des Nutzers in die entgegengesetzte zweite Richtung (entlang der x-Achse 311) (zurück-) geschoben werden kann (um ein zweite Eingabesignal zu bewirken).

Die Figuren 3a und 3b zeigen ein (kartesisches) Koordinatensystem 310 mit einer x-Achse 311, einer y-Achse 312 und einer z-Achse 313. Im eingebauten Zustand des Bedienelements 300 kann die x-Achse 311 der Längsachse des Fahrzeugs 110, die y-Achse 312 der Querachse des Fahrzeugs 110 und die z-Achse der Hochachse des Fahrzeugs 110 entsprechen. Der Schlitten 302 kann ausgebildet sein, entlang der x-Achse 311 hin und her bewegt zu werden.

Des Weiteren umfasst das Bedienelement 300 ein um den Schlitten 302 angeordnetes Betätigungsteil 304, das von dem Nutzer berührt werden kann. Insbesondere kann das Betätigungsteil 304 ausgebildet sein, es dem Nutzer zu ermöglichen, den Schlitten 302 durch Betätigung des Betätigungsteils 304 entlang der x-Achse 311 zu verschieben. Beispielsweise kann das Betätigungsteil 304 ausgebildet sein, entlang der x-Achse 311 hin und her bewegt zu werden, um eine entsprechende Bewegung des Schlittens 302 zu bewirken.

Des Weiteren kann das Betätigungsteil 304 ausgebildet sein, entlang der y-Achse 312 und/oder entlang der z-Achse 313 relativ zu dem Schlitten 302 bewegt (insbesondere gedreht) zu werden. Beispielsweise kann das Betätigungsteil 304 derart ausgebildet sein, dass das Betätigungsteil 304 durch eine Kraft in y-Achse 312 entlang der y-Achse 312 relativ zu dem Schlitten 302 bewegt werden kann. Dabei kann eine Auslenkung des Betätigungsteils 304 relativ zu dem Schlitten 302 nach rechts (als ein Eingabesignal) oder nach links (als ein weiteres Eingabesignal) erfolgen.

In entsprechender Weise kann das Betätigungsteil 304 derart ausgebildet sein, dass das Betätigungsteil 304 durch eine Kraft in z-Achse 313 entlang der z-Achse 313 relativ zu dem Schlitten 302 bewegt (insbesondere gedreht) werden kann. Dabei kann eine Auslenkung des Betätigungsteils 304 relativ zu dem Schlitten 302 nach oben (als ein Eingabesignal) oder nach unten (als ein weiteres Eingabesignal) erfolgen.

Die Auslenkung des Betätigungsteils 304 entlang der y-Achse 312 und entlang der z-Achse 313 kann in präziser Weise durch die Bereitstellung einer Kreuzkulisse 305 an dem Bedienelement 300 ermöglicht werden. So kann eine exakte Führung der Eingaben "oben", "unten", "rechts" und "links" ermöglicht werden.

Das Bedienelement 300 umfasst somit ein Betätigungsteil 304 für den Fahrer eines Fahrzeugs 110, wobei das Betätigungsteil 304 um den Schlitten 302 gekippt werden kann, um jeweils zwei unterschiedliche Funktionen ausführen zu können, d.h. "links" bzw. "rechts" für zwei Funktion und/oder "oben" und "unten" für zwei weitere Funktionen.

Es wird somit ein Bedienelement 300 beschrieben, das sechs unterschiedliche Eingabemöglichkeiten umfasst, und es somit ermöglicht, durch eine 6-Wege-Eingabe im Infotainment-System eines Fahrzeugs 110 zu bestimmten Funktionen zu navigieren und diese anzuwählen.

Das Bedienelement 300 umfasst ein fest mit dem Lenkerrohr 115 verbundenes Basisteil 301, welches die Verbindung des Bedienelements 300 zu dem Lenker herstellt. Des Weiteren umfasst das Bedienelement 300 einen Schlitten 302, welcher vor und zurück bewegt werden kann (siehe Pfeile in Fig. 3a). Dadurch können z.B. Funktionen wie "Bestätigen" und "Zurück" angesteuert werden. Ferner umfasst das Bedienelement 300 ein Betätigungsteil 304 für den Fahrer, welches in die Richtungen "links", "rechts", "oben" und "unten" bewegt werden kann. Somit wird es ermöglicht, eine intuitive Navigation durch ein Menü 220 mit mehreren Funktionen durchzuführen. Dabei kann eine Kreuzkulisse 305 in dem Betätigungsteil 304 für eine exakte Führung nach links, rechts, oben und unten bereitgestellt werden.

Das Betätigungsteil 304 kann eine Mulde 306 an der dem Fahrer zugewandten Frontseite und eine Mulde 306 an der von dem Fahrer abgewandten Rückseite für einen Finger (insbesondere den Daumen bzw. den Zeigefinger) des Fahrers aufweisen. Durch eine Mulde 306 wird es dem Fahrer ermöglicht, in komfortabler Weise Kräfte entlang aller Achsen 311, 312, 313 auf das Betätigungsteil 304 auszuüben, um entsprechende Eingaben zu tätigen.

Das Bedienelement 300 ermöglicht es dem Fahrer eines Fahrzeugs 110, in effizienter und komfortabler Weise an einem einzigen Bedienelement 300 sechs unterschiedliche Eingaben (zum Auslösen von sechs unterschiedlichen Funktionen) zu tätigen. So kann in effizienter Weise eine intuitive Bedienung mit exakt definierten Bedienbewegungen ermöglicht werden.

Die vorliegende Erfindung ist nicht auf die gezeigten Ausführungsbeispiele beschränkt. Insbesondere ist zu beachten, dass die Beschreibung und die Figuren nur das Prinzip der vorgeschlagenen Verfahren, Vorrichtungen und Systeme veranschaulichen sollen.

## Patentansprüche

1. Bedienelement (300) für ein Fahrzeug (110), das ein Lenkmittel (115) zur Lenkung des Fahrzeugs (110) umfasst; wobei das Bedienelement (300) umfasst,
- ein Basisteil (301), das ausgebildet ist, das Bedienelement (300) an dem Lenkmittel (115) des Fahrzeugs (110) zu befestigen;
- einen Schlitten (302), der ausgebildet ist, von einem Nutzer (120) des Bedienelements (300) in eine erste Richtung entlang einer x-Achse (311) eines Koordinatensystems (310) relativ zu dem Basisteil (301) bewegt zu werden, um eine erste Eingabe zu tätigen, und in eine entgegengesetzte zweite Richtung entlang der x-Achse (311) relativ zu dem Basisteil (301) bewegt zu werden, um eine zweite Eingabe zu tätigen; und
- eine Steuereinheit (111), die eingerichtet ist, ein von der Eingabe des Nutzers (120) abhängiges Eingabesignal zu generieren, **dadurch gekennzeichnet, dass** das Bedienelement weiterhin umfasst,
- ein den Schlitten (302) zumindest teilweise umschließendes Betätigungsteil (304), das ausgebildet ist, von dem Nutzer (120) relativ zu dem Schlitten (302) in eine erste Richtung entlang einer y-Achse (312) des Koordinatensystems (310) bewegt zu werden, um eine dritte Eingabe zu tätigen, und relativ zu dem Schlitten (302) in eine entgegengesetzte zweite Richtung entlang der y-Achse (312) des Koordinatensystems (310) bewegt zu werden, um eine vierte Eingabe zu tätigen.

2. Bedienelement (300) gemäß Anspruch 1, wobei das Betätigungsteil (304) ausgebildet ist, von dem Nutzer (120) relativ zu dem Schlitten (302) in eine erste Richtung entlang einer z-Achse (313) des Koordinatensystems (310) bewegt zu werden, um eine fünfte Eingabe zu tätigen, und relativ zu dem Schlitten (302) in eine entgegengesetzte zweite Richtung entlang der z-Achse (313) des Koordinatensystems (310) bewegt zu werden, um eine sechste Eingabe zu tätigen.

3. Bedienelement (300) gemäß einem der vorhergehenden Ansprüche, wobei das Bedienelement (300) eine Kulisse (305), insbesondere eine Kreuzkulisse, umfasst, die ausgebildet ist, die Relativbewegung des Betätigungsteils (304) relativ zu dem Schlitten (302) entlang der y-Achse (312) und/oder entlang einer z-Achse (313) des Koordinatensystems (310) zu führen.

4. Bedienelement (300) gemäß einem der vorhergehenden Ansprüche, wobei das Betätigungsteil (304) den Schlitten (302) derart umschließt, dass der Schlitten (302) entlang der x-Achse (311) bewegt wird, wenn der Nutzer (120) eine Kraft entlang der x-Achse (311) auf das Betätigungsteil (304) bewirkt.

5. Bedienelement (300) gemäß einem der vorhergehenden Ansprüche, wobei das Betätigungsteil (304) eine Mulde (306) umfasst, die derart ausgebildet ist, dass der Nutzer (120) mit einem Finger in die Mulde (306) greifen kann, um eine Kraft entlang der x-Achse (311), entlang der y-Achse (312) und entlang einer z-Achse (313) des Koordinatensystems (310) auf das Betätigungsteil (304) ausüben zu können.

6. Bedienelement (300) gemäß einem der vorhergehenden Ansprüche, wobei das Betätigungsteil (304)
- eine erste Mulde (306) umfasst, die dem Nutzer (120) zugewandt ist, wenn das Bedienelement (300) an dem Lenkmittel (115) des Fahrzeugs (110) befestigt ist, so dass der Nutzer (120) die erste Mulde (306) mit einem Daumen betätigen kann; und
- eine zweite Mulde (306) umfasst, die von dem Nutzer (120) abgewandt ist, wenn das Bedienelement (300) an dem Lenkmittel (115) befestigt ist, so dass der Nutzer (120) die zweite Mulde (306) mit einem Zeigefinger betätigen kann.

7. Bedienelement (300) gemäß einem der vorhergehenden Ansprüche, wobei das Basisteil (301) eine Gleitfläche (303) aufweist, auf der der Schlitten (302) entlang der x-Achse (311) relativ zu dem Basisteil (301) bewegt werden kann.

8. Bedienelement (300) gemäß einem der vorhergehenden Ansprüche, wobei das Bedienelement (300) derart ausgebildet ist, dass das Betätigungsteil (304) relativ zu dem Schlitten (302) innerhalb eines begrenzten Auslenkungsbereichs entlang der y-Achse (312) und/oder entlang einer z-Achse (313) des Koordinatensystems (310) gedreht bzw. rotiert werden kann, insbesondere ohne dass sich dabei der Schlitten (302) relativ zu dem Basisteil (301) bewegt.

9. Benutzerschnittstelle (200) für ein Fahrzeug (110), insbesondere für ein einspuriges Fahrzeug (110); wobei das Fahrzeug (110) ein Lenkmittel (115) umfasst, das ausgebildet ist, es einem Fahrer (120) des Fahrzeugs (110) zu ermöglichen, das Fahrzeug (110) zu lenken; wobei das Lenkmittel (115) zumindest einen Griff (202) für eine Hand des Fahrers (120) umfasst; wobei die Benutzerschnittstelle (200) umfasst,
- ein an dem Griff (202) angeordnetes Bedienelement (300) gemäß einem der vorhergehenden Ansprüche, das ausgebildet ist, von dem Fahrer (120) mit der Hand betätigt zu werden, während die Hand des Fahrers (120) den Griff (202) berührt; und
- eine Steuereinheit (111), die eingerichtet ist,
- eine Eingabe an dem Bedienelement (204) zu detektieren; und
- eine der Eingabe entsprechende Aktion auszuführen.

10. Benutzerschnittstelle (200) gemäß Anspruch 9, wobei
- die Benutzerschnittstelle (200) eine, insbesondere an dem Lenkmittel (115) angeordnete, Anzeigeeinheit (201) umfasst, die eingerichtet ist, eine optische Anzeige auszugeben; und
- die Steuereinheit (111) eingerichtet ist, die optische Anzeige in Abhängigkeit von der Eingabe zu verändern.

11. Benutzerschnittstelle (200) gemäß Anspruch 10, wobei
- die Anzeigeeinheit (201) eingerichtet ist, ein Eingabemenü (220) mit einer Mehrzahl von Menüpunkten (221) als optische Anzeige auszugeben; und
- die Steuereinheit (111) eingerichtet ist, in Abhängigkeit von der Eingabe innerhalb des Eingabemenüs (220) zu navigieren und/oder einen Menüpunkt (221) des Eingabemenüs (220) auszuwählen und/oder eine Ebene des Eingabemenüs (220) zu wechseln.

12. Fahrzeug (110), insbesondere ein einspuriges Fahrzeug (110), das umfasst,
- ein Lenkmittel (115), das ausgebildet ist, es einem Fahrer (120) des Fahrzeugs (110) zu ermöglichen, das Fahrzeug (110) zu lenken;
- einen an dem Lenkmittel (115) angeordneten Griff (202) für eine Hand des Fahrers (120); und
- eine Benutzerschnittstelle (200) gemäß einem der Ansprüche 9 bis 11.

## Claims

1. Operator control element (300) for a vehicle (110) that comprises a steering means (115) for steering the vehicle (110), wherein the operator control element (300) comprises
- a base part (301) that is designed to fasten the operator control element (300) to the steering means (115) of the vehicle (110);
- a slide (302) that is designed to be moved by a user (120) of the operator control element (300) in a first direction along an x-axis (311) of a coordinate system (310) relative to the base part (301) in order to make a first input and to be moved in an opposite second direction along the x-axis (311) relative to the base part (301) in order to make a second input; and
- a control unit (111) that is designed to generate an input signal that is dependent on the input by the user (120), **characterized in that** the operator control part furthermore comprises
- an operating part (304) that at least partially encloses the slide (302) and is designed to be moved by the user (120) relative to the slide (302) in a first direction along a y-axis (312) of the coordinate system (310) in order to make a third input and relative to the slide (302) in an opposite second direction along the y-axis (312) of the coordinate system (310) in order to make a fourth input.

2. Operator control element (300) according to Claim 1, wherein the operating part (304) is designed to be moved by the user (120) relative to the slide (302) in a first direction along a z-axis (313) of the coordinate system (310) in order to make a fifth input and relative to the slide (302) in an opposite second direction along the z-axis (313) of the coordinate system (310) in order to make a sixth input.

3. Operator control element (300) according to one of the preceding claims, wherein the operator control element (300) comprises a slotted guide (305), in particular a cruciform slotted guide, that is designed to guide the relative movement of the operating part (304) relative to the slide (302) along the y-axis (312) and/or along a z-axis (313) of the coordinate system (310) .

4. Operator control element (300) according to one of the preceding claims, wherein the operating part (304) encloses the slide (302) in such a way that the slide (302) is moved along the x-axis (311) when the user (120) applies a force to the operating part (304) along the x-axis (311).

5. Operator control element (300) according to one of the preceding claims, wherein the operating part (304) comprises a recess (306) that is designed in such a way that the user (120) can reach into the recess (306) using a finger in order to be able to exert a force on the operating part (304) along the x-axis (311), along the y-axis (312) and along a z-axis (313) of the coordinate system (310).

6. Operator control element (300) according to one of the preceding claims, wherein the operating part (304)
- comprises a first recess (306) that faces the user (120) when the operator control element (300) is fastened to the steering means (115) of the vehicle (110), so that the user (120) can operate the first recess (306) using a thumb; and
- comprises a second recess (306) that faces away from the user (120) when the operator control element (300) is fastened to the steering means (115), so that the user (120) can operate the second recess (306) using an index finger.

7. Operator control element (300) according to one of the preceding claims, wherein the base part (301) has a sliding surface (303) on which the slide (302) can be moved along the x-axis (311) relative to the base part (301) .

8. Operator control element (300) according to one of the preceding claims, wherein the operator control element (300) is designed in such a way that the operating part (304) can be turned or rotated relative to the slide (302) within a limited deflection range along the y-axis (312) and/or along a z-axis (313) of the coordinate system (310), in particular without the slide (302) moving relative to the base part (301) in the process.

9. User interface (200) for a vehicle (110), in particular for a single-track vehicle (110), wherein the vehicle (110) comprises a steering means (115) that is designed to allow a driver (120) of the vehicle (110) to steer the vehicle (110), wherein the steering means (115) comprises at least one handle (202) for a hand of the driver (120); wherein the user interface (200) comprises
- an operator control element (300) according to one of the preceding claims that is arranged on the handle (202) and is designed to be operated by the driver (120) using a hand while the hand of the driver (120) is in contact with the handle (202); and
- a control unit (111) that is designed
- to detect an input on the operator control element (204); and
- to execute an action that corresponds to the input.

10. User interface (200) according to Claim 9, wherein
- the user interface (200) comprises a display unit (201), in particular arranged on the steering means (115), that is designed to output an optical display; and
- the control unit (111) is designed to change the optical display depending on the input.

11. User interface (200) according to Claim 10, wherein
- the display unit (201) is designed to output an input menu (220) comprising a plurality of menu items (221) as an optical display; and
- the control unit (111), depending on the input, is designed to navigate within the input menu (220) and/or to select a menu item (221) of the input menu (220) and/or to change a level of the input menu (220) .

12. Vehicle (110), in particular a single-track vehicle (110), that comprises
- a steering means (115) that is designed to allow a driver (120) of the vehicle (110) to steer the vehicle (110);
- a handle (202), arranged on the steering means (115), for a hand of the driver (120); and
- a user interface (200) according to one of Claims 9 to 11.

## Revendications

1. Elément de commande (300) pour un véhicule (110) qui comprend un moyen de direction (115) pour conduire le véhicule (110) ; l'élément de commande (300) comprenant
- une partie de base (301) qui est réalisée pour fixer l'élément de commande (300) au moyen de direction (115) du véhicule (110) ;
- un curseur (302) qui est réalisé pour être déplacé par un utilisateur (120) de l'élément de commande (300) dans une première direction le long d'un axe x (311) d'un système de coordonnées (310) par rapport à la partie de base (301) pour effectuer une première entrée, et pour être déplacé dans une deuxième direction opposée le long de l'axe x (311) par rapport à la partie de base (301) pour effectuer une deuxième entrée ; et
- une unité de commande (111) qui est aménagée pour produire un signal d'entrée en fonction de l'entrée de l'utilisateur (120),
**caractérisé en ce que** la partie de commande comprend en outre
- un élément d'actionnement (304) entourant au moins partiellement le curseur (302) et qui est réalisé pour être déplacé par l'utilisateur (120) par rapport au curseur (302) dans une première direction le long d'un axe y (312) du système de coordonnées (310) pour effectuer une troisième entrée, et pour être déplacé par rapport au curseur (302) dans une deuxième direction opposée le long de l'axe y (312) du système de coordonnées (310) pour effectuer une quatrième entrée.

2. Elément de commande (300) selon la revendication 1, dans lequel la partie d'actionnement (304) est réalisée pour être déplacée par l'utilisateur (120) par rapport au curseur (302) dans une première direction le long d'un axe z (313) du système de coordonnées (310) pour effectuer une cinquième entrée, et pour être déplacé par rapport au curseur (302) dans une deuxième direction opposée le long de l'axe z (313) du système de coordonnées (310) pour effectuer une sixième entrée.

3. Elément de commande (300) selon l'une quelconque des revendications précédentes, dans lequel l'élément de commande (300) comprend une coulisse (305), en particulier une coulisse croisée qui est réalisée pour guider le mouvement relatif de la partie d'actionnement (304) par rapport au curseur (302) le long de l'axe y (312) et/ou le long d'un axe z (313) du système de coordonnées (310).

4. Elément de commande (300) selon l'une quelconque des revendications précédentes, dans lequel la partie d'actionnement (304) entoure le curseur (302) de telle sorte que le curseur (302) est déplacé le long de l'axe x (311) lorsque l'utilisateur (120) crée une force sur la partie d'actionnement (304) le long de l'axe x (311) .

5. Elément de commande (300) selon l'une quelconque des revendications précédentes, dans lequel la partie d'actionnement (304) comprend un creux (306) qui est réalisé de telle sorte que l'utilisateur (120) peut mettre un doigt dans le creux (306) afin de pouvoir exercer une force sur la partie d'actionnement (304) le long de l'axe x (311), le long de l'axe y (312) et le long d'un axe z (313) du système de coordonnées (310).

6. Elément de commande (300) selon l'une quelconque des revendications précédentes, dans lequel la partie d'actionnement (304)
- comprend un premier creux (306) qui est tourné vers l'utilisateur (120) lorsque l'élément de commande (300) est fixé au moyen de direction (115) du véhicule (110) de sorte que l'utilisateur (120) peut actionner le premier creux (306) avec un pouce ; et
- comprend un deuxième creux (306) qui est détourné de l'utilisateur (120) lorsque l'élément de commande (300) est fixé au moyen de direction (115) de sorte que l'utilisateur (120) peut actionner le deuxième creux (306) avec l'index.

7. Elément de commande (300) selon l'une quelconque des revendications précédentes, dans lequel la partie de base (301) présente une surface de glissement (303) sur laquelle le curseur (302) peut être déplacé le long de l'axe x (311) par rapport à la partie de base (301).

8. Elément de commande (300) selon l'une quelconque des revendications précédentes, dans lequel l'élément de commande (300) est réalisé de telle sorte que la partie d'actionnement (304) peut être amenée à pivoter ou à tourner par rapport au curseur (302) à l'intérieur d'une plage d'excursion limitée le long de l'axe y (312) et/ou le long d'un axe z (313) du système de coordonnées (310), en particulier sans pour autant faire bouger le curseur (302) par rapport à la partie de base (301).

9. Interface utilisateur (200) pour un véhicule (110), en particulier pour un véhicule à voie unique (110) ; le véhicule (110) comprenant un moyen de direction (115) qui est réalisé pour permettre à un conducteur (120) du véhicule (110) de conduire le véhicule (110) ; le moyen de direction (115) comprenant au moins une poignée (202) pour une main du conducteur (120) ; l'interface utilisateur (200) comprenant
- un élément de commande (300) selon l'une quelconque des revendications précédentes, disposé sur la poignée (202) et qui est réalisé pour être actionné par le conducteur (120) avec la main pendant que la main du conducteur (120) touche la poignée (202) ; et
- une unité de commande (111) qui est aménagée pour
- détecter une entrée sur l'élément de commande (204) ; et
- effectuer une action correspondant à l'entrée.

10. Interface utilisateur (200) selon la revendication 9, dans laquelle
- l'interface utilisateur (200) comprend une unité d'affichage (201), en particulier disposée sur le moyen de direction (115), qui est aménagée pour sortir un affichage optique ; et
- l'unité de commande (111) est aménagée pour modifier l'affichage optique en fonction de l'entrée.

11. Interface utilisateur (200) selon la revendication 10, dans laquelle
- l'unité d'affichage (201) est aménagée pour sortir sous forme d'affichage optique un menu d'entrée (220) avec une pluralité d'éléments de menu (221) ; et
- l'unité de commande (111) est aménagée pour naviguer à l'intérieur du menu d'entrée (220) en fonction de l'entrée, et/ou pour sélectionner un élément de menu (221) du menu d'entrée (220), et/ou pour changer un niveau du menu d'entrée (220).

12. Véhicule (110), en particulier un véhicule à voie unique (110), comprenant
- un moyen de direction (115) qui est réalisé pour permettre à un conducteur (120) du véhicule (110) de conduire le véhicule (110) ;
- une poignée (202) disposée sur le moyen de direction (115) pour une main du conducteur (120) ; et
- une interface utilisateur (200) selon l'une quelconque des revendications 9 à 11.
